# FASCICULE DE BREVET EUROPEEN

(11) **EP 0 685 374 B1**
(45) Date de publication et mention de la délivrance du brevet: **09.09.1998**
(21) Numéro de dépôt: 95108245.2
(22) Date de dépôt: 30.05.1995
(51) Int. Cl.: B60S 1/16, F16H 57/02

(54) **Moto-réducteur, notamment pour un dispositif d'essuie-glace de véhicule**
Getriebemotor, insbesondere für eine Fahrzeugscheibenwischeranlage
Geared motor, especially for the windscreen wiper assembly of a vehicle

(30) Priorité: 03.06.1994 FR 9406977
(43) Date de publication de la demande: 06.12.1995
(73) Titulaire: VALEO SYSTEMES D'ESSUYAGE, 78321 La Verrière (FR)
(72) Inventeur: Lerouge, Dominique, F-86130 Saint-Cyr (FR); Stelmarski, Pascal, F-86000 Poitiers (FR); Meneguz, Raphael, F-86100 Chatellerault (FR); Gallaud, Eric, F-86100 Chatellerault (FR)
(74) Mandataire: Gamonal, Didier

(56) Documents cités:
- EP-A- 0 479 673
- WO-A-91/00203
- WO-A-93/12957
- DE-A- 3 247 421
- FR-A- 2 603 358

## Description

La présente invention se rapporte à un moto-réducteur, notamment pour un dispositif d'essuie-glace de véhicule comme indiqué dans le préambule de la revendication 1.

Un tel moto-réducteur, connu par le document WO-A-91 00203, est constitué d'un moteur électrique dont l'arbre du rotor est prolongé par une vis sans fin qui pénètre dans un carter creux contenant un système réducteur et fermé par une plaque de fermeture.

Le système réducteur est constitué par une roue dentée entraînée en rotation par la vis sans fin et actionnant, par l'intermédiaire d'un axe excentré porté par ladite roue, un système bielle-manivelle commandant, dans un mouvement de rotation alternatif, un arbre de sortie traversant le fond du carter pour mettre en mouvement un dispositif d'essuyage.

L'arbre de sortie est relié de manière classique à au moins un essuie-glace constitué d'un bras et d'un balai qui va balayer un certain secteur angulaire sur le pare-brise du véhicule.

Du fait de l'évolution des pare-brise qui deviennent de plus en plus panoramiques et inclinés, la taille des essuie-glaces doit augmenter et par conséquent, leur poids augmente également. D'autre part, l'angle de balayage parcouru par les essuie-glaces est de plus en plus important et peut maintenant atteindre 180 degrés.

Ceci amène un certain nombre de problèmes au niveau du système d'entraînement de l'essuie-glace. En effet, comme on l'a vu ci-dessus, l'arbre de sortie est entraîné par un système bielle-manivelle composé d'un bras relié, à une extrémité, à l'axe excentré de la roue dentée et, à l'autre extrémité, présentant un secteur denté engrenant avec un autre secteur denté lié de manière fixe à l'arbre de sortie.

Lorsque l'essuie-glace balaie une zone allant de sa position de parcage à une position à 90 degrés de cette dernière, les deux secteurs dentés du système d'entraînement coopèrent parfaitement et le mouvement d'essuyage est régulier. Par contre, quand l'essuie-glace dépasse cette zone et parcourt un secteur angulaire situé au delà de 90 degrés par rapport à sa position de parcage, de par l'inertie emmagasinée par l'essuie-glace, celui-ci devient un élément moteur par rapport au moto-réducteur et il arrive que les secteurs dentés ne coopèrent plus complètement. Les dents du secteur denté lié à l'arbre de sortie peuvent ainsi sortir des dents du secteur denté situé à l'extrémité du bras entraîné par la roue dentée. Ainsi, l'essuie-glace se trouve libre quand il parcourt cette zone et il ne peut plus être mis en mouvement par le moteur électrique.

De plus, lorsque l'essuie-glace revient vers sa position de parcage, il se produit un à-coup au moment où les dents des deux secteurs dentés se rencontrent. Ceci produit des bruits et des irrégularités dans l'essuyage qui peuvent être désagréables pour l'utilisateur d'un tel dispositif.

On a déjà proposé des solutions pour limiter les à-coups dans les positions extrêmes de balayage. Par exemple, les documents US-A-5 182 957 et EP-A-0 498 949 présentent des butées de fin de course basées sur le principe suivant.

Un membre d'arrêt de forme annulaire entoure l'arbre de sortie et est lié à celui-ci en rotation. Il est muni d'une patte coulissant dans une gorge entourant l'arbre de sortie, ladite gorge comportant à ses deux extrémités correspondant aux positions extrêmes de balayage, des éléments élastiques dans lesquels vient buter la patte du membre d'arrêt lorsque l'essuie-glace atteint ses positions extrêmes.

Ceci a pour effet de limiter les à-coups de l'essuie-glace et le bruit en résultant. Cependant cela ne résout pas le problème de l'accélération de l'essuie-glace quand il dépasse la position à 90 degrés de sa position de parcage. De plus, cette solution implique de rajouter au dispositif réducteur plusieurs pièces de forme élaborée ce qui complique la fabrication de ce dernier

On se propose donc de trouver un moyen simple et économique d'assurer un essuyage régulier, silencieux et qui limite les variations du couple de charge du moteur ainsi que celles du coefficient de frottement entre le balai et la vitre, vues par le moteur.

Dans ce but, la présente invention propose un moto-réducteur, notamment pour un dispositif d'essuie-glace de véhicule, comprenant, dans un carter creux muni d'une plaque de fermeture, une roue dentée mobile en rotation autour d'un axe, portant un pion, parallèle audit axe et excentré par rapport à celui-ci, qui entraîne un système bielle-manivelle permettant d'engendrer, à partir du mouvement de rotation continue de ladite roue dentée, un mouvement de rotation alternatif à un arbre de sortie, caractérisé en ce que ledit arbre de sortie comporte un moyen de freinage en rotation.

Grâce à l'invention, l'arbre est constamment soumis à une force de freinage

Selon une autre caractéristique de l'invention, le moyen de freinage comporte un patin, solidarisé en rotation avec l'arbre de sortie, disposé pour venir frotter sur l'un des éléments plaque de fermeture/ carter enfermant le réducteur.

Selon une autre caractéristique de l'invention, le patin du moyen de freinage est disposé à l'extrémité de l'arbre de sortie.

Selon une autre caractéristique de l'invention, le moyen de freinage comporte un support disposé au bout de l'arbre de sortie, ledit support portant un patin, solidarisé en rotation avec ledit support, et disposé pour frotter sur la plaque de fermeture.

Selon une autre caractéristique de l'invention, le support est en forme de cuvette et le patin est de forme complémentaire à ladite cuvette.

Selon une autre caractéristique de l'invention le support du patin comporte au moins une encoche présente dans la partie latérale dudit support et coopérant avec au moins une saillie disposée à la périphérie du patin. De cette manière, le patin est solidarisé en rotation avec le support.

Selon une autre caractéristique de l'invention, la partie latérale du support présente sur sa périphérie au moins une surface plane.

Selon une autre caractéristique de l'invention, le support présente sur sa partie latérale deux parties planes et diamétralement opposées.

Selon d'autres caractéristiques de l'invention, le support contient un moyen d'appui élastique agissant sur le patin, ledit moyen d'appui élastique étant constitué par une rondelle élastique disposée sous le patin, ladite rondelle élastique étant de forme circulaire et de dimension inférieure à celle du patin.

Grâce à cette rondelle, l'appui du patin sur la plaque de fermeture est régulier et élastique et cela permet de rattraper le jeu axial qui peut exister au niveau de l'arbre de sortie.

Selon une variante de l'invention, le support du patin comporte au moins une patte saillante à partir du bord extérieur de la partie latérale dudit support, repliée et insérée dans au moins une encoche pratiquée à la périphérie du patin.

Grâce à cette patte, le patin est maintenu dans son support et ceci facilite la manipulation de l'ensemble constitué par le support, la rondelle et le patin lors du montage du moto-réducteur selon l'invention.

Selon un autre aspect de l'invention, le support du patin est emmanché serré dans un alésage prévu à l'extrémité de l'arbre de sortie, et solidarisé en rotation avec ledit arbre de sortie. Le manche dudit support comporte au moins une nervure disposée longitudinalement et destinée à s'insérer dans au moins une encoche pratiquée dans l'alésage situé à l'extrémité de l'arbre de sortie.

Ceci permet de solidariser le support et l'arbre et d'empêcher tout mouvement rotationnel du support par rapport à l'arbre.

Selon un autre aspect de l'invention, le support du patin comporte une bague centrale annulaire venant entourer l'extrémité de l'arbre de sortie en étant fixée sur celle-ci. Ceci permet d'immobiliser le support en rotation vis à vis de l'arbre de sortie.

Selon un autre aspect de l'invention, le patin est de forme générale circulaire et de diamètre sensiblement égal au diamètre intérieur du support.

Selon une autre caractéristique de l'invention, le patin présente sur sa circonférence au moins une partie plane.

Selon une autre caractéristique de l'invention, le patin présente sur sa circonférence deux parties planes diamétralement opposées.

Ainsi, la forme du patin est complémentaire de celle du support et les parties planes permettent de bloquer ledit patin en rotation dans le support.

Selon une autre caractéristique de l'invention, la plaque de fermeture du boîtier dudit moto-réducteur comporte un logement pour la réception au moins en partie du moyen de freinage.

Ce logement est de taille sensiblement supérieure au diamètre du support de manière à immobiliser celui-ci, et par conséquent l'arbre de sortie, contre tout mouvement radial par rapport au boîtier.

D'autres caractéristiques et avantages apparaîtront à la lecture de la description suivante en se référant aux dessins annexés parmi lesquels:
- la figure 1 est une vue en coupe montrant un moto-réducteur présentant un système de freinage selon l'invention.
- la figure 2 est une vue en élévation selon la figure 1 dans laquelle on considère que la plaque de fermeture est transparente.
- la figure 3 est une vue agrandie d'un détail de la figure 1 montrant le système de freinage situé à l'extrémité de l'arbre de sortie.
- la figure 4 est une vue agrandie de l'extrémité de l'arbre de sortie montrant un système de freinage selon un autre mode de réalisation.
- la figure 5 est une vue en élévation d'un détail de la figure 4 montrant certains des éléments de l'invention.

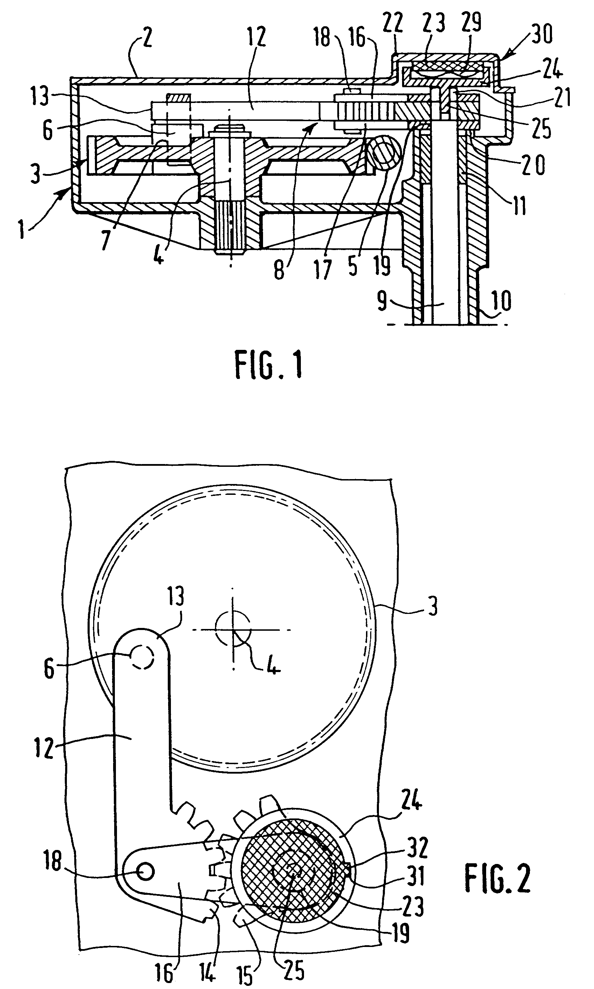

Sur les figures 1 et 2, on a représenté un moto-réducteur, notamment pour l'entraînement d'un système d'essuyage, comprenant un carter 1 muni d'une plaque de fermeture 2. Ce carter contient une roue dentée 3 mobile en rotation autour d'un axe 4 et entraînée par une vis sans fin 5 issue du rotor d'un moteur électrique non représenté.

La roue 3 porte un pion 6, parallèle à l'axe 4 et sensiblement excentré par rapport à celui-ci, monté libre en rotation dans un logement 7 de la roue 3.

Le pion 6 est relié de manière fixe à un système bielle-manivelle 8 qui permet de transformer le mouvement de rotation de la roue 3 en mouvement de rotation alternatif à un arbre de sortie 9. Ledit arbre de sortie 9 est logé dans un fût 10 situé au fond du carter 1 en reposant sur un coussinet antifriction 11.

Le système bielle-manivelle 8 est composé d'un bras 12 formant bielle, relié à l'une 13 de ses extrémités au pion 6, et présentant à l'autre extrémité un secteur denté 14 engrenant avec un autre secteur denté 15 lié de manière fixe à l'arbre de sortie en formant une manivelle. Deux balanciers 16 et 17, situés de part et d'autre des faces longitudinales des secteurs dentés 14 et 15, maintiennent en coopération lesdits secteurs dentés ce qui forme une liaison rigide entre le bras 12 et l'arbre de sortie 9. Ces balanciers sont reliés ensembles, d'une part par l'intermédiaire d'une tige 18 disposée à l'une des extrémités des balanciers et traversant le bras 12, et d'autre part par une ouverture 19 prévue à l'autre extrémité desdits balanciers qui vient, pour le balancier 17, se positionner entre la face inférieure du secteur denté 15 et la face d'appui 20 présente au fond du carter et pour le balancier 16, entourer l'extrémité supérieure 21 de l'arbre de sortie 9.

Le carter 1 est fermé sur sa partie supérieure par une plaque de fermeture 2, généralement réalisée à partir d'une feuille métallique de faible épaisseur, et reliée aux bords dudit carter par tous moyens connus tel que serrage par vis ou rivetage.

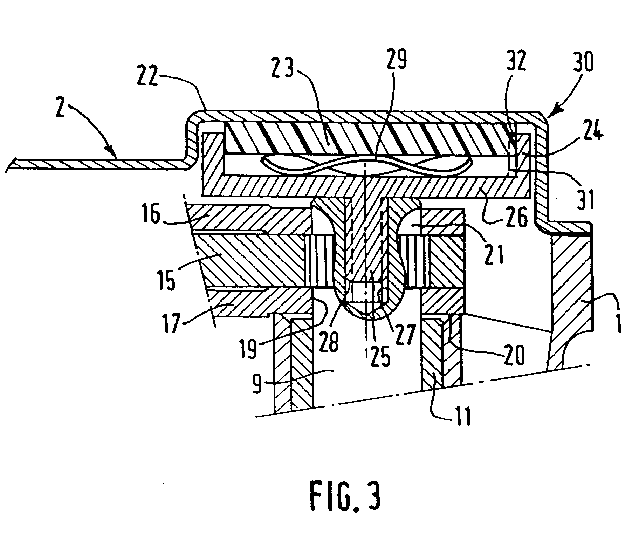

Cette plaque de fermeture comporte, comme mieux visible sur la figure 3, un logement 22 formé par enfoncement de la plaque vers l'extérieur dans lequel vient se loger un patin 23 en un matériau de friction, de forme circulaire, ledit patin étant placé dans un support 24, par exemple en acier, qui vient s'emmancher au bout de l'arbre de sortie et est solidarisé en rotation avec celui-ci, le tout constituant un système de freinage 30.

Le support 24, qui peut être réalisé en acier, présente un manche 25 surmonté d'une coupelle 26 de forme circulaire, à fond plat et à bords cylindriques, de diamètre sensiblement inférieur à la taille du logement 22 de la plaque de fermeture.

Il est solidarisé en rotation avec l'arbre de sortie 9 au moyen d'un alésage 27 pratiqué à l'extrémité dudit arbre de sortie 9 et présentant une ou plusieurs encoches 28, dans le sens longitudinal, dont les formes se complètent avec une ou plusieurs nervures (non représentées) du manche 25 dudit support 24. Le diamètre du manche 25 du support 24 est sensiblement égal à celui de l'alésage 27 pratiqué à l'extrémité de l'arbre de sortie 9 de manière à ce qu'il n'y ait pas de jeu entre le support et l'arbre de sortie.

Le patin 23 est libre de se déplacer axialement dans la partie cylindrique du support 24. Il est solidarisé en rotation avec ledit support au moyen d'au moins une encoche longitudinale 31 présente dans la partie cylindrique dudit support et coopérant avec au moins une saillie 32 disposée longitudinalement à la périphérie du patin 23.

Une rondelle élastique 29 est disposée à l'intérieur de la coupelle 26 du support 24, sous le patin 23. Celle-ci est en matériau élastique et permet d'assurer un appui régulier du patin 23 dans le logement 22 de la plaque de fermeture. En effet, en fabrication en série, si on ne met pas la rondelle 29, il peut exister des écarts de quelques dixièmes de millimètre entre le patin 23 et le logement 22 de la plaque de fermeture, ceci étant dû à de légers écarts de dimension des pièces comme par exemple le support, le patin, le socle, la plaque de fermeture ou l'embiellage.

La rondelle 29 permet donc d'assurer un appui régulier et élastique du patin 23 dans le logement 22 de la plaque de fermeture.

Cette rondelle élastique 29 permet de plus d'assurer un rattrapage du jeu axial qui peut exister au niveau de l'arbre de sortie 9.

Le patin 23, en venant frotter contre le logement 22 de la plaque de fermeture, assure une action de freinage de l'arbre de sortie et donc de l'essuie-glace. Ainsi, lorsque l'essuie-glace, au cours de l'essuyage, dépasse la position située à 90 degrés par rapport à sa position de parcage, le frein constitué par le patin frottant sur le logement 22 de la plaque de fermeture empêche ledit essuie-glace d'avoir un mouvement accéléré.

Ainsi, le système de freinage 30 permet d'avoir un mouvement d'essuyage général régulier, et lorsque le sens d'engrenage des secteurs dentés change à chaque cycle de balayage, cela se fait sans à-coup et donc sans bruit.

D'autre part, le système de freinage présente un autre avantage, celui de limiter les variations du couple de charge du moteur électrique. En effet, comme l'arbre de sortie est en permanence freiné, le moteur doit fournir un couple quasiment constant pour entraîner ledit arbre de sortie. Le fait de rajouter la rondelle élastique 29 permet en outre d'assurer un appui souple du patin 23 dans le logement 22 de la plaque de fermeture et donc de ne pas trop augmenter le couple de charge du moteur.

La disposition du logement 22 de la plaque de fermeture 2, de taille sensiblement supérieure au diamètre du support 24, permet d'immobiliser l'arbre de sortie 9 vis à vis de tous mouvements radiaux qui peuvent être provoqués par exemple sous l'action des efforts de transmission du système bielle-manivelle 8.

Ainsi, non seulement l'arbre de sortie 9 est maintenu axialement grâce à la rondelle élastique 29 qui rattrape tout jeu axial, mais il est aussi maintenu en position radialement vis à vis du boîtier 2 grâce à la complémentarité du logement 22 du boîtier avec le support 24.

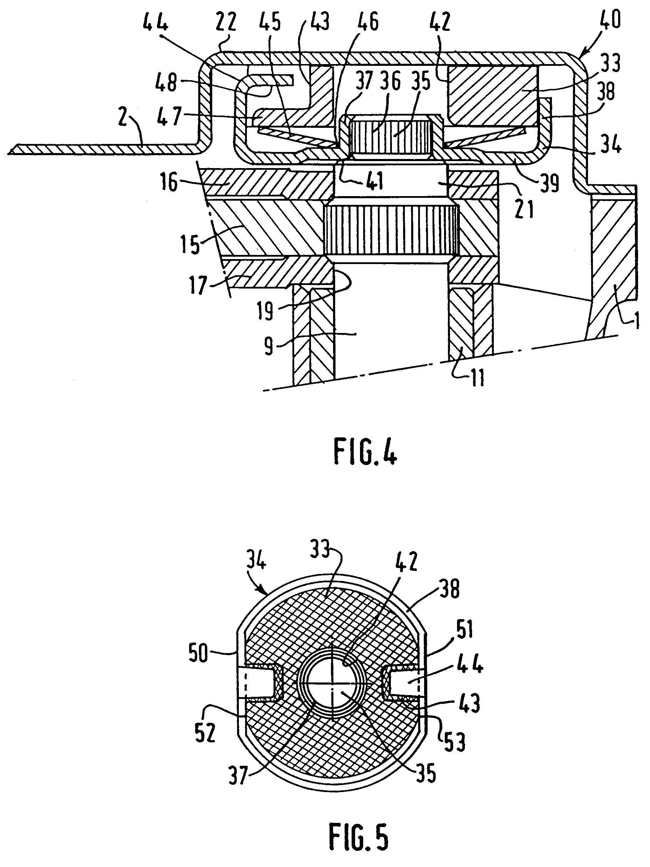

Les figures 4 et 5 présentent un autre mode de réalisation du système de freinage 40.

Dans ce mode de réalisation, les éléments similaires à ceux des figures précédentes portent les mêmes numéros de référence et ne seront pas décrits plus avant.

Le support 34 est dans ce cas maintenu au bout de l'arbre de sortie 9 sur une extrémité 35 de celui-ci. Ladite extrémité est cylindrique et de diamètre inférieur à celui de l'arbre de sortie et elle présente des cannelures 36 de manière à s'insérer dans la partie interne d'une bague centrale annulaire 37 du support.

Le support 34 comporte en effet une partie sensiblement cylindrique extérieure 38 et une bague centrale annulaire 37, de hauteur inférieure à la partie cylindrique extérieure, ainsi qu'un fond 39.

La partie extérieure sensiblement cylindrique 38 comporte deux parties planes 50 et 51 diamétralement opposées.

La bague annulaire 37 du support est de diamètre interne inférieur à celui de l'extrémité 35 de l'arbre de sortie 9, de manière à ce que les cannelures 36 de l'extrémité 35 de l'arbre s'insèrent dans la bague annulaire 37 pour immobiliser le support 34 en rotation vis à vis de l'arbre de sortie.

Le fond 39 du support est d'autre part appuyé au bout de l'arbre sur un épaulement 41 créé par la différence de diamètre entre l'extrémité proprement dite 21 de l'arbre et l'extrémité 35 ajoutée dans ce mode de réalisation.

Le patin 33 qui est disposé dans le support présente un alésage 42 permettant audit patin de coulisser axialement autour de la bague centrale annulaire 37 dudit support.

Dans ce mode de réalisation, le patin 33 est sensiblement circulaire mais il comporte deux parties planes 52 et 53 diamétralement opposées, destinées, lorsque le patin est mis en place dans le support 34, à venir appuyer sur les parties planes 50 et 51 dudit support, de manière à bloquer le patin en rotation dans le support 34.

Une rondelle élastique 45 est également disposée au fond du support, sous le patin 33. Elle présente en son centre un alésage 46 de diamètre sensiblement supérieur à celui de la bague annulaire 37 du support 34, de manière à ce que ladite rondelle puisse être glissée au fond du support 34.

Le patin 33 présente au moins une encoche 43 pratiquée à sa périphérie et dans laquelle vient se placer au moins une patte 44 du support. Cette patte 44 est, avant montage du patin dans le support 34, dans la continuité de la partie cylindrique 38 dudit support. Une fois le patin mis en place dans le support, la patte 44 est repliée pour venir se placer dans l'encoche 43 du patin.

Sur la figure 4, il est visible que l'encoche 43 n'est pas pratiquée sur toute l'épaisseur du patin 33. Il existe en effet une partie 47, située sous l'encoche 43, qui vient prendre appui sur la rondelle 45.

Lors du montage du dispositif, lorsque la plaque de fermeture 2 n'est pas placée, la rondelle élastique a tendance à faire sortir le patin 33 de son support 34 mais une fois que la languette 44 est repliée, sa face 48 vient appuyer sur la partie 47 du patin en formant une butée en translation permettant de maintenir ledit patin dans son support.

Ceci facilite la manipulation de l'ensemble constitué par le support 34, la rondelle 45 et le patin 33 lors du montage du moto-réducteur selon l'invention.

En position de travail, la plaque de fermeture 2 est mise sur le carter et appuie sur le patin 33 qui vient écraser la rondelle 45. Dans ce cas, un intervalle se crée entre la surface 48, située sous la patte 44, et la partie 47 du patin. Ceci permet d'avoir une certaine usure dudit patin sans pour autant que la partie 47 de ce dernier ne bute sur la patte 44 ce qui aurait pour effet de bloquer le patin dans une position et d'annuler l'action de la rondelle 45.

Les fonctions et avantages de la rondelle 45 et du patin 33 sont les mêmes que celles décrites plus haut avec la rondelle 29 et le patin 23 de la figure 3.

Il est bien entendu que la description donnée ci-dessus du dispositif n'est aucunement limitative et pourra donner lieu à toute modification désirable sans sortir pour cela du cadre de l'invention. Par exemple, le patin peut se présenter sous la forme d'une rondelle disposée autour de l'arbre de sortie et frottant contre le fût du carter contenant ledit arbre de sortie.

## Revendications

1. Moto-réducteur, notamment pour un dispositif d'essuie-glace de véhicule, comprenant, dans un carter creux (1) muni d'une plaque de fermeture (2), une roue dentée (3) mobile en rotation autour d'un axe (4) portant un pion (6), parallèle à l'axe (4) et excentré par rapport à celui-ci, qui entraîne un système bielle-manivelle (8) permettant d'engendrer, à partir du mouvement de rotation continue de ladite roue dentée (3), un mouvement de rotation alternatif à un arbre de sortie (9), caractérisé en ce que ledit arbre de sortie (9) comporte un moyen de freinage (30,40) en rotation.

2. Moto-réducteur selon la revendication 1 caractérisé en ce que le moyen de freinage (30,40) comporte un patin (23,33), solidarisé en rotation avec l'arbre de sortie (9), disposé pour venir frotter sur l'un des éléments plaque de fermeture (2)/ carter (1) enfermant le réducteur.

3. Moto-réducteur selon la revendication 2 caractérisé en ce que le patin (23,33) du moyen de freinage (30,40) est disposé à l'extrémité de l'arbre de sortie (9).

4. Moto-réducteur selon la revendication 1 caractérisé en ce que le moyen de freinage (30,40) comporte un support (24,34) disposé au bout de l'arbre de sortie (9), ledit support portant un patin (23,33), lié en rotation avec ledit support, et disposé pour frotter sur la plaque de fermeture (2).

5. Moto-réducteur selon la revendication 4 caractérisé en ce que le support (24) est en forme de cuvette et en ce que le patin (23) est de forme complémentaire à ladite cuvette.

6. Moto-réducteur selon la revendication 4 ou 5 caractérisé en ce que le support (24) comporte au moins une encoche (31) présente dans la partie latérale dudit support et coopérant avec au moins une saillie (32) disposée à la périphérie du patin (23)

7. Moto-réducteur selon la revendication 5 caractérisé en ce que la partie latérale (38) du support (34) présente sur sa périphérie au moins une surface plane (50, 51).

8. Moto-réducteur selon la revendication 7 caractérisé en ce que le support (34) présente sur sa partie latérale (38) deux parties planes (50) et (51) diamétralement opposées.

9. Moto-réducteur selon l'une des revendications 4 à 8 caractérisé en ce que le support (24,34) contient un moyen d'appui élastique (29,45) agissant sur le patin (23,33).

10. Moto-réducteur selon la revendication 9 caractérisé en ce que le moyen d'appui élastique est constitué par une rondelle élastique (29,45) disposée sous le patin (23,33).

11. Moto-réducteur selon la revendication 10 caractérisé en ce que la rondelle élastique (29,45) est de forme circulaire et de dimension inférieure à la dimension du patin (23,33).

12. Moto-réducteur selon la revendication 4 ou 5 caractérisé en ce que le support (34) comporte au moins une patte (44) saillante à partir du bord extérieur de la partie latérale (38) dudit support, repliée et insérée dans au moins une encoche (43) pratiquée à la périphérie du patin (33).

13. Moto-réducteur selon l'une des revendications 4 à 12 caractérisé en ce que le support (24) comprend un manche (25), porté par un alésage (27) prévu à l'extrémité (21) de l'arbre de sortie (9), et solidarisé en rotation avec ledit arbre de sortie (9).

14. Moto-réducteur selon la revendication 13 caractérisé en ce que le manche (25) du support (24) comporte au moins une nervure disposée longitudinalement et destinée à s'insérer dans au moins une encoche (28) pratiquée dans l'alésage (27) situé à l'extrémité de l'arbre de sortie (9).

15. Moto-réducteur selon la revendication 4 caractérisé en ce que le support (34) comporte une bague centrale annulaire (37) venant entourer l'extrémité (35) de l'arbre de sortie (9) en étant fixée sur celle-ci.

16. Moto-réducteur selon l'une des revendications 4 à 15 caractérisé en ce que le patin (23,33) est de forme générale circulaire et de diamètre sensiblement égal au diamètre intérieur du support (24,34).

17. Moto-réducteur selon la revendication 16 caractérisé en ce que le patin (33) présente sur sa circonférence au moins une partie plane (52, 53).

18. Moto-réducteur selon la revendication 17 caractérisé en ce que le patin (33) présente sur sa circonférence deux parties planes (52) et (53) diamétralement opposées.

19. Moto-réducteur selon l'une des revendications précédentes caractérisé en ce que la plaque de fermeture (2) du boîtier dudit moto-réducteur comporte un logement (22) pour la réception au moins en partie du moyen de freinage.

20. Moto-réducteur selon la revendication 19 caractérisé en ce que le logement (22) est de taille sensiblement supérieure au diamètre du support (24,34).

## Claims

1. A speed reducing motorised drive unit, especially for a vehicle screen wiping apparatus, comprising, in a hollow casing (1) having a cover plate (2), a toothed wheel (3) which is rotatable about an axis (4) and carries a gudgeon pin (6) parallel to the axis (4) and eccentric with respect to the latter, and which drives a crank and connecting rod system (8) for generating alternating rotary motion of an output shaft (9) from the continuous rotary motion of the said toothed wheel (3), characterised in that the said output shaft (9) includes rotary brake means (30, 40).

2. A speed reducing motorised drive unit according to Claim 1, characterised in that the brake means (30, 40) includes a friction pad (23, 33), fixed to the output shaft (9) for rotation therewith and so disposed as to engage frictionally on one of the elements consisting of the cover plate (2) and the casing (1) that encloses the speed reducer.

3. A speed reducing motorised drive unit according to Claim 2, characterised in that the pad (23, 33) of the brake means (30, 40) is disposed at the end of the output shaft (9).

4. A speed reducing motorised drive unit according to Claim 1, characterised in that the brake means (30, 40) includes a support member (24, 34) disposed at the end of the output shaft (9), the said support member carrying a friction pad (23, 33), coupled in rotation with the said support member and arranged to engage frictionally on the cover plate (2).

5. A speed reducing motorised drive unit according to Claim 4, characterised in that the support member (24) is in the form of a dish, and in that the pad (23) is of complementary form to the said dish.

6. A speed reducing motorised drive unit according to Claim 4 or Claim 5, characterised in that the support member (24) includes at least one groove (31) which is present in the lateral portion of the said support member and which cooperates with at least one projection (32) disposed at the periphery of the pad (23).

7. A speed reducing motorised drive unit according to Claim 5, characterised in that the lateral portion (38) of the support member (34) has at least one flat surface (50, 51) on its periphery.

8. A speed reducing motorised drive unit according to Claim 7, characterised in that the support member (34) has two diametrically opposed flat portions (50 and 51) on its lateral portion (38).

9. A speed reducing motorised drive unit according to one of Claims 4 to 8, characterised in that the support member (24, 34) contains a resilient biasing means (29, 45) acting on the pad (23, 33).

10. A speed reducing motorised drive unit according to Claim 9, characterised in that the resilient biasing means consists of a resilient ring (29, 45) disposed under the pad (23, 33).

11. A speed reducing motorised drive unit according to Claim 10, characterised in that the resilient ring (29, 45) is of circular form and of smaller dimension than the pad (23, 33).

12. A speed reducing motorised drive unit according to Claim 4 or Claim 5, characterised in that the support member (34) includes at least one lug (44) projecting from the outer edge of the lateral portion (38) of the said support member, and bent back and inserted into at least one recess (43) formed at the periphery of the pad (33).

13. A speed reducing motorised drive unit according to one of Claims 4 to 12, characterised in that the support member (24) includes a spigot portion (25), carried by a bore (27) formed in the end (21) of the output shaft (9), and fixed to the said output shaft (9) for rotation therewith.

14. A speed reducing motorised drive unit according to Claim 13, characterised in that the spigot portion (25) of the support member (24) includes at least one rib which is disposed longitudinally and which is adapted to be inserted into at least one groove (28) formed in the bore (27) situated at the end of the output shaft (9).

15. A speed reducing motorised drive unit according to Claim 4, characterised in that the support member (34) includes an annular central ring portion (37) which surrounds the end portion (35) of the output shaft (9), on which it is fixed.

16. A speed reducing motorised drive unit according to one of Claims 4 to 15, characterised in that the pad (23, 33) is generally circular and has a diameter substantially equal to the internal diameter of the support member (24, 34).

17. A speed reducing motorised drive unit according to Claim 16, characterised in that the pad (33) has at least one flat portion (52, 53) on its circumference.

18. A speed reducing motorised drive unit according to Claim 17, characterised in that the pad (33) has two diametrically opposed flat portions (52 and 53) on its circumference.

19. A speed reducing motorised drive unit according to one of the preceding Claims, characterised in that the cover plate (2) of the casing of the said speed reducing motorised drive unit includes a housing (22) for receiving at last part of the brake means.

20. A speed reducing motorised drive unit according to Claim 19, characterised in that the housing (22) has an extent substantially greater than the diameter of the support member (24, 34).

## Patentansprüche

1. Getriebemotor, insbesondere für eine Fahrzeugscheibenwischeranlage, der in einem mit einer Verschlußplatte (2) versehenen hohlen Gehäuse (1) ein um eine Achse (4) drehbewegliches Zahnrad (3) umfaßt, das einen parallel zur Achse (4) und im Verhältnis zu dieser außermittig angeordneten Stift (6) trägt, der einen Kurbeltrieb (8) antreibt, um, ausgehend von der kontinuierlichen Drehbewegung des besagten Zahnrads (3), eine Pendeldrehbewegung an einer Ausgangswelle (9) zu erzeugen,**dadurch gekennzeichnet**, daß die besagte Ausgangswelle (9) ein Drehbremsmittel (30, 40) umfaßt.

2. Getriebemotor nach Anspruch 1, **dadurch gekennzeichnet,** daß das Bremsmittel (30, 40) ein drehfest mit der Ausgangswelle (9) verbundenes Gleitstück (23, 33) umfaßt, das so angeordnet ist, daß es mit einem der Elemente Verschlußplatte (2) oder Gehäuse (1), das das Untersetzungsgetriebe umschließt, in Reibung tritt.

3. Getriebemotor nach Anspruch 2, **dadurch gekennzeichnet,** daß das Gleitstück (23, 33) des Bremsmittels (30, 40) am Ende der Ausgangswelle (9) angeordnet ist.

4. Getriebemotor nach Anspruch 1, **dadurch gekennzeichnet,** daß das Bremsmittel (30, 40) eine Halterung (24, 34) umfaßt, die am Ende der Ausgangswelle (9) angeordnet ist, wobei diese Halterung ein Gleitstück (23, 33) trägt, das drehfest mit der besagten Halterung verbunden und so angeordnet ist, daß es an der Verschlußplatte (2) in Reibung tritt.

5. Getriebemotor nach Anspruch 4, **dadurch gekennzeichnet,** daß die Halterung (24) die Form eines Tellers hat und daß das Gleitstück (23) formschlüssig mit diesem Teller ausgeführt ist.

6. Getriebemotor nach Anspruch 4 oder 5,**dadurch gekennzeichnet,** daß die Halterung (24) mindestens eine Ausklinkung (31) aufweist, die im Seitenteil der besagten Halterung vorhanden ist und mit mindestens einem Vorsprung (32) zusammenwirkt, der am Umfang des Gleitstücks (23) angeordnet ist.

7. Getriebemotor nach Anspruch 5, **dadurch gekennzeichnet,** daß der Seitenteil (38) der Halterung (34) auf seinem Umfang mindestens eine ebene Fläche (50, 51) aufweist.

8. Getriebemotor nach Anspruch 7, **dadurch gekennzeichnet,** daß die Halterung (34) auf ihrem Seitenteil (38) zwei diametral gegenüberliegende ebene Teile (50) und (51) aufweist.

9. Getriebemotor nach einem der Ansprüche 4 bis 8, **dadurch gekennzeichnet,** daß die Halterung (24, 34) ein elastisches Auflagemittel (29, 45) enthält, das auf das Gleitstück (23, 33) einwirkt.

10. Getriebemotor nach Anspruch 9,**dadurch gekennzeichnet,** daß das elastische Auflagemittel aus einer Federscheibe (29, 45) besteht, die unter dem Gleitstück (23, 33) angeordnet ist.

11. Getriebemotor nach Anspruch 10 , **dadurch gekennzeichnet,** daß die Federscheibe (29, 45) kreisförmig und mit einer geringeren Größe als das Gleitstück (23, 33) ausgeführt ist.

12. Getriebemotor nach Anspruch 4 oder 5 , **dadurch gekennzeichnet,** daß die Halterung (24) mindestens einen von der Außenkante des Seitenteils (38) der besagten Halterung aus vorstehenden Ansatz (44) umfaßt, der umgebogen und in mindestens eine am Umfang des Gleitstücks (33) eingearbeitete Ausklinkung (43) eingesetzt ist.

13. Getriebemotor nach einem der Ansprüche 4 bis 12, **dadurch gekennzeichnet,** daß die Halterung (24) einen Stiel (25) umfaßt, der in einer am Ende (21) der Ausgangswelle (9) vorgesehenen Bohrung (27) gelagert und drehfest mit der besagten Ausgangswelle (9) verbunden ist.

14. Getriebemotor nach Anspruch 13 , **dadurch gekennzeichnet,** daß der Stiel (25) der Halterung (24) mindestens eine Rippe umfaßt, die in Längsrichtung angeordnet und dazu bestimmt ist, sich in mindestens eine Ausklinkung (28) einzufügen, die in die am Ende der Ausgangswelle (9) angeordnete Bohrung (27) eingearbeitet ist.

15. Getriebemotor nach Anspruch 4,**dadurch gekennzeichnet**, daß die Halterung (34) einen kreisrunden mittigen Ring (37) umfaßt, der das Ende (35) der Ausgangswelle (9) umgibt, wobei er an dieser befestigt ist.

16. Getriebemotor einem der Ansprüche 4 bis 15, **dadurch gekennzeichnet**, daß das Gleitstück (23, 33) allgemein kreisförmig und mit einem Durchmesser ausgeführt ist, der in etwa gleich dem Innendurchmesser der Halterung (24, 34) ist.

17. Getriebemotor nach Anspruch 16 , **dadurch gekennzeichnet,** daß das Gleitstück (33) auf seinem Kreisumfang mindestens einen ebenen Teil (52, 53) aufweist.

18. Getriebemotor nach Anspruch 17 , **dadurch gekennzeichnet,** daß das Gleitstück (33) an seinem Kreisumfang zwei diametral gegenüberliegende ebene Teile (52) und (53) aufweist.

19. Getriebemotor nach einem der vorangehenden Ansprüche, **dadurch gekennzeichnet**, daß die Verschlußplatte (2) des Gehäuses des besagten Getriebemotors eine Aufnahme (22) umfaßt, um darin das Bremsmittel zumindest teilweise einzusetzen.

20. Getriebemotor nach Anspruch 19 , **dadurch gekennzeichnet,** daß die Aufnahme (22) etwas größer als der Durchmesser der Halterung (24, 34) ist.
